Europäisches Patentamt

European Patent Office

Office européen des brevets

(19)

(11) **EP 1 144 947 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(51) Int Cl.⁷: **G01C 15/00**, G01B 3/00

(21) Anmeldenummer: **00902621.2**

(86) Internationale Anmeldenummer:
**PCT/EP2000/000412**

(22) Anmeldetag: **19.01.2000**

(87) Internationale Veröffentlichungsnummer:
**WO 2000/043732 (27.07.2000 Gazette 2000/30)**

(54) **ANORDNUNG ZUR BESTIMMUNG DER HÖHENLAGE EINES GEODÄTISCHEN INSTRUMENTS**

SYSTEM FOR DETERMINING THE HEIGHT OF A GEODETIC TOOL

DISPOSITIF POUR LA DETERMINATION DU NIVEAU D'UN APPAREIL GEODESIQUE

(84) Benannte Vertragsstaaten:
**AT BE CH CY DE DK ES FI FR GB GR IE IT LI LU MC NL PT SE**

(30) Priorität: **19.01.1999 CH 8799**
**19.01.1999 CH 8899**

(43) Veröffentlichungstag der Anmeldung:
**17.10.2001 Patentblatt 2001/42**

(73) Patentinhaber: **Leica Geosystems AG**
**9435 Heerbrugg (CH)**

(72) Erfinder: **SCHWÄRZLER, Johannes, Gallus**
**A-6923 Lauterach (AT)**

(74) Vertreter: **Kaminski, Susanne et al**
**Büchel, Kaminski & Partner**
**Patentanwälte Est.**
**Austrasse 79**
**9490 Vaduz (LI)**

(56) Entgegenhaltungen:
**US-A- 4 339 880          US-A- 5 639 966**

• **PATENT ABSTRACTS OF JAPAN vol. 018, no. 539 (P-1812), 13. Oktober 1994 (1994-10-13) & JP 06 194168 A (ASAHI SEIMITSU KK), 15. Juli 1994 (1994-07-15)**

**Beschreibung**

Die Erfindung bezieht sich auf eine Anordnung zur Bestimmung der Höhenlage eines auf einem Stativ montierten geodätischen Instruments über einer Referenzfläche nach dem Oberbegriff des Anspruchs 1 und auf einen Abstandshalter für eine solche Anordnung nach dem Oberbegriff des Anspruchs 12.

Für Vermessungsaufgaben mit geodätischen Instrumenten ist es erforderlich, beispielsweise die Höhe der optischen Achse des Instruments über einer Referenzfläche zu kennen. Die Referenzfläche wird durch einen geodätischen Fixpunkt (Basispunkt), der z.B. in einem Grenzstein markiert ist, definiert.

In der DE 40 07 245 A1 wird eine auf dem Dreifuss vor der Montage aufgesetzte Lasereinrichtung zur lotrechten Positionierung über dem Basispunkt verwendet. Anschliessend soll mit dem Laser die Höhenlage des Geräts über dem Basispunkt bestimmt werden. Basispunkte sind beispielsweise in einem Grenzstein meist durch Vertiefungen oder Einkerbungen markiert. Die Referenzebene ist jedoch durch die höchste Erhebung des Grenzsteins definiert. Die Messung mittels Laserstrahls ist daher ungenau.

Andere Anordnungen verwenden Massbänder in Form von Rollmetern. Das Rollmeter wird an einem Adapter (Höhenmessbügel, Höhenhaken) befestigt, so dass es sich während der Messung in der Lotlinie über dem Basispunkt befindet. Bekannte Adapter werden mittels eines Dorns in einer Zentrierbuchse des Instruments befestigt und führen um den Dreifuss und den Stativkopf herum in die Lotlinie. Eine Bedienperson zieht das Rollmeter aus dem Rollmeter und führt es auf den Grenzstein. Die Höhenlage des Instruments wird an einer Ablesemarke des Rollmeters angezeigt. Der Messvorgang ist beschwerlich und anfällig für Ungenauigkeiten, weil einerseits das Rollmeterende vom Benutzer auf dem Grenzstein zu halten ist, andererseits die Ablesemarkierung in der Höhe abzulesen ist. Auch windbedingte Ungenauigkeiten können auftreten. Derartige Adapter bestehen aus Metall und sind relativ sperrig. Dadurch ist ihr Transport problematisch.

In der Patentschrift US 5,720,106 wird eine Messung der relativen Höhenlage eines auf einem Stativ montierten geodätischen Instruments über der Referenzfläche ausserhalb der Lotlinie beschrieben. Hierbei wird aber nicht die Höhenlage an der Ablesemarke des Rollmeters angezeigt.

In der Patentschrift US 5,639,966 wird die gleiche Messung der Höhenlage eines Instrumentes beschrieben, dessen Gehäuse eine punktförmige Markierung in der die Höhenlage des Instrumentes bestimmenden Ebene aufweist. Mit einer rechtwinkligen Vorrichtung, deren erster Schenkel die Länge des Abstandes der punktförmigen Markierung von der Lotlinie und deren zweiter Schenkel die Länge der in der Praxis auftretenden Höhenlagen des Instrumentes und eine lineare Skala aufweisen, kann die Höhenlage auf dieser Skala abgelesen werden. Neben der Schwierigkeit, den ersten Schenkel jeweils auf den in der Regel jeweils vom eingesetzten Instrumententyp abhängigen Abstand der Gehäusemarkierung von der Lotlinie einzustellen, weist diese Vorrichtung grosse Abmessungen auf.

In der Patentschrift US 4,339,880 wird eine dreibeinige Positioniervorrichtung zur sicheren und lotrechten Positionierung eines geodätischen Lotstocks über einem definierten Bodenpunkt beschrieben. Der Lotstock dient seinerseits zur Aufnahme eines geodätischen Reflektors oder eines anderen Instruments. Die drei Beine der Vorrichtung sind einenends ausklappbar an einer Plattform befestigt und andernends in den Boden gerammt, sowie in Bodennähe über drei Querstreben miteinander lösbar verbunden. Der Lotstock wird auf den Bodenpunkt gestellt und in Bodennähe in einem unveränderlichen Abstand zur Querstrebe fixiert, sowie vertikal ausgerichtet an der Plattform im jeweiligen Abstand fixiert.

Die Aufgabe der Erfindung besteht darin, eine eingangs genannte Anordnung zur Bestimmung der Höhenlage eines auf einem Stativ montierten geodätischen Instruments über einer Referenzfläche anzugeben, die mit einfachen Mitteln ein ausreichend genaues Messergebnis liefert.

Diese Aufgabe wird durch die Verwirklichung der kennzeichnenden Merkmale des Anspruchs 1 gelöst.

Vorteilhafte bzw. alternative Lösungen sind in den Kennzeichen der abhängigen Ansprüche beschrieben.

Die Anordnung nach der Erfindung verlässt das Prinzip, innerhalb der Lotlinie zu messen. Statt dessen bildet die Messstrecke einen Winkel zur Lotlinie. Durch eine geeignete Gestaltung der Skala ist trotzdem die lotrechte Höhenlage über dem Referenzbasispunkt ausreichend genau abzulesen.

Zur Längenmessung eignet sich einerseits ein Rollmeter, welches an einem am Stativ, am Stativkopf bzw. am Dreifuss oder auch am Instrument befestigten Abstandshalter befestigt wird, nach unten gezogen und auf die Referenzfläche bezogen auf den Fixpunkt aufgesetzt wird. Die Skala auf dem Skalenband des Rollmeters ist angepasst und zeigt nicht etwa die Länge der gemessenen Strecke, sondern die gesuchte lotrechte Höhenlage des Instruments über dem Fixpunkt an. Alternativ kann ein Messstab verwendet werden, z.B. ein sogenannter Lotstab, der auf der Referenzfläche in der Nähe des Basispunkts aufgesetzt wird und am Abstandshalter abzulesen ist. Die auf dem Lotstab aufgebrachte Skala gibt wiederum die lotrechte Höhenlage an. Der Abstandshalter weist gegenüber bekannten Adaptern relativ geringe Aussenabmessungen auf, Rollmeter und Lotstab führt der Benutzer eines geodätischen Instruments ohnehin in der Standardausrüstung mit.

Die Skala von Rollmeter bzw. Lotstab ist nichtlinear eingeteilt und - unter der Voraussetzung, dass der Abstandhalter horizontal ausgerichtet ist - unter Anwendung des sogenannten Satzes von Pythagoras, der die Seitenlängen eines rechtwinkliges Dreiecks untereinander in Beziehung setzt, berechnet. Die Katheten des rechtwinkligen Dreiecks werden durch den Abstand vom Angriffspunkt oder Ende des Abstandshalters auf die Lotlinie und durch die Höhe dieser Abstandsebene über der Referenzfläche am Basispunkt längs der Lotlinie gebildet. Die Hypotenuse des rechtwinkligen Dreiecks ist durch den Abstand zwischen der Referenzfläche am Basispunkt und dem Ende des Abstandshalters gegeben. Sollte der Abstandshalter nicht horizontal an dem Stativ anzuordnen sein, so wird die Skala des diesem Abstandhalter zugeordneten Messgerätes, ob Rollmeter oder Lotstab, entsprechend anders berechnet sein. Vorteilhaft ist, dass ein Messdorn, eine Messschneide oder ein Anschlag des Rollmeters beziehungsweise ein Ende des Lotstabs nicht unmittelbar im Basispunkt, auf dem die Lotlinie steht, angesetzt werden muss, sondern geringfügig ausserhalb positioniert werden kann. Die dadurch bedingte Ungenauigkeit der Messung kann vernachlässigt werden. Vielmehr kann nun das Rollmeter beziehungsweise der Lotstab auf der höchsten Erhebung der Bodenmarkierung, z.B. des Grenzsteins, aufgesetzt werden, welche die Referenzebene definiert.

Wird nun beispielsweise ein Rollmeter zur Messung der Länge benutzt, das auch zur Messung anderer Längen als der Höhenlage des Instrumentes verwendet werden soll, dann wird sich - um Ableseunsicherheiten zu vermeiden - das Anbringen der nichtlinearen Skala in kodierter Form anbieten. Dies ist in gleicher Weise für den Einsatz eines Zollstocks gegeben.

Unter "kodierter Darstellung" einer Skala sollen im Rahmen der vorliegenden Erfindung Darstellungen verstanden sein, die nicht unmittelbar, sondern nur mittelbar ablesbar ist, sei es beispielsweise durch Zwischenschalten eines Spiegels - dann ist die Skalendarstellung spiegelverkehrt auf dem Skalenträger aufgebracht -, sei es über ein spezielles Farbfilter - dann ist die Skalendarstellung farbverfälscht und mit dem freien Auge nicht differenzierbar - oder sei es über Zwischenschaltung einer anamorphotischen Linse - dann ist die Skala verzerrt defokussiert aufgebracht. Die obigen Beispiele für kodierte Darstellung sind nicht abschliessend. So ist beispielsweise das Vorsehen von Ableseschiebern bzw. -fenstern mit versetzter Rasterung denkbar, die das Ablesen der Skala erst im Zusammenspiel mit einer die unmittelbare Ablesung der Skala am Skalenträger erschwerenden bzw. verunmöglichenden Gegenrasterung ermöglicht.

Ist beispielsweise eine Skala auf dem Skalenträger in der oben beschriebenen Form kodiert aufgebracht, so kann sie nur vermittels des entsprechenden Ablesemittels abgelesen werden. Versucht die Bedienperson diese kodierte Skala an der Ablesemarke abzulesen, die der nicht kodiert aufgebrachten Skala zugeordnet ist, wird der Irrtum unmittelbar evident. Das Ablesen ist erschwert, wenn nicht verunmöglicht. In entsprechender Weise wird für die nicht kodiert aufgebrachte Skala ein Ablesefehler vermieden, sollte die Bedienperson versuchen, diese Skala über das Ablesemittel abzulesen.

Bei der Verwendung einer zylindrischen Linse, deren Achse entlang des Skalenträgers verläuft, kann - vorzugsweise in der Mitte des Skalenträgers - eine gestauchte Skala aufgebracht sein, die nur mittels der Zylinderlinse lesbar wird. Oberhalb sowie unterhalb der gestauchten Skalierung, die mit freiem Auge nur als punktierter Strich sichtbar ist können jeweils unmittelbar sowie gegebenenfalls weitere, nur mittelbar lesbare Skalen aufgebracht sein. Die gestauchte Skala kann in diesem Fall gleichzeitig als Trennlinie für verschiedenartige Skalen oberhalb und unterhalb von ihr dienen.

Da über das Ablesemittel i.a. nur ein relativ kleiner Skalenbereich lesbar wird, werden Massnahmen getroffen, die ein möglichst fehlerfreies Ablesen gewährleisten. Das wird beispielsweise durch speziell ausgeführte Skalen und/oder die Vergrösserung des Ablesebereiches bewerkstelligt:

So kann die Skala so modifiziert werden, dass auch bei einem relativ kleinen Ablesebereich eindeutig ersichtlich wird, in welche Richtung der Skala die Zahlen aufsteigend geordnet sind.

Um den Ablesebereich zu vergrössern, muss das Gehäuse nicht grösser gebaut werden. Möglich wird eine Verbreiterung des Ablesebereiches beispielsweise durch Vorsehen eines Spiegels, der nicht unter einem Winkel von 45° sondern einem spitzen Winkel geneigt ist. Dadurch wird die Skala gestaucht dargestellt und ein Ablesefehler - bedingt durch spiegelverkehrt abzulesende Teilstriche - vermieden, weil immer mehrere, dem Massstab der Skala entsprechend aufsteigend geordnete Zahlen im Sichtfeld aufscheinen.

Alternativ oder auch zusätzlich zu dem unter einem spitzen Winkel geneigten Spiegel kann auch ein konkav geformter Spiegel oder ein entsprechend konkav geformtes Prisma verwendet werden, um die Skala gestaucht darzustellen. Auch kann einem Spiegel eine Streulinse vorgelagert sein. Dies führt zwar je nach Güte des Spiegels oder der Linse zu geringfügigen Verzerrungen am Rande des Sichtfeldes, die aber das Ablesen nicht negativ beeinflussen.

Ein ähnliches Ergebnis erhält man, wenn die Lauffläche, auf der der Skalenträger sich an der Ablesemarke vorbeibewegt, nicht eben sondern gekrümmt ausgebildet ist. Die Skala wird dabei gestaucht abgebildet und wird in den Randbereichen kleinere Verzerrungen aufweisen. Der Abstand Skalenträger Ablesemarke wird dabei möglichst gering und konstant zu halten sein.

Die Skalen können sowohl auf den einander gegenüber liegenden Seiten des Skalenträgers als auch auf der gleichen Seite aufgebracht sein. Die Skalen unterscheiden sich beispielsweise in unterschiedlichen Anfangspunkten, auf die die längs der Skala notierte Bemassung bezogen ist. Die Skalen können auch - bezogen auf die zu messende Länge - verschiedene lineare oder nichtlineare Abhängigkeiten aufweisen. Im allgemeinen ist die Erfindung dann vorteilhaft anwendbar, wenn Skaleneinteilung und Markierung (abgesehen von der kodierten Darstellung) verschiedener Skalen nicht identisch sind. So wäre dieses System - unabhängig von der hier beschriebenen Anwendung - auch für Winkelmesser (Grad- bzw. Radianteinteilung) oder Geschwindigkeitsmesser (Kilometer bzw. Meilen pro Stunde) einsetzbar.

Es können die den verschiedenen Skalen zugeordneten Ablesemarkierungen, beispielsweise für Rollmeter, an verschiedenen Stellen des Gehäuses angeordnet sein. Der Abstand zwischen den beiden Markierungen ist zumindest so gross, dass eine gute Ablesbarkeit gewährleistet ist und die Markierungen ausreichend deutlich von der Bedienperson unterschieden werden können.

Die auf dem Skalenträger kodiert aufgebrachte Skala befindet sich - für Rollmeter - zweckmässigerweise auf derjenigen Seite, die aufgerollt auf dem Skalenträger, der Skalenbandrolle, nach aussen weist. Das Ablesemittel ist dann der Rolle gegenüber in der Gehäusewand befestigt.

Zweckmässigerweise wird der Skalenträger - für Rollmeter - gegenüber der Ablesemarke für das Ablesemittel auf einer Lauffläche oder über einen Laufsteg geführt. Der Abstand zwischen Spiegel und Skalenträger bleibt unabhängig von der ausgezogenen Länge des Skalenbands gleich. Eine Ableseparallaxe wird dadurch verringert. Um den Ablesefehler durch Parallaxe praktisch vollkommen auszuschalten, wird nicht nur an der dem Skalenträger zugewandten Seite des Ablesemittels eine Ablesemarke angebracht, sondern auch an der dem Benützer zugewandten Seite.

Die Lauffläche bewirkt weiters einen konstanten Ausziehwinkel, weil der Skalenträger in jedem Fall über diese läuft.

Die Ablesemarke ist zweckmässigerweise eine gut ablesbare, farbig markierte Linie.

Das erfindungsgemässe Messgerät ermöglicht eine selektive Ablesung der einzelnen Skalen, die auf bewusste Weise erfolgen muss, die Ablesung sicher macht und keine unbewusste Verwechslung möglich ist. Das bei dem erfindungsgemässen Höhenmesser eingesetzte Rollmeter kann daneben selbstverständlich auch ganz normal in üblicher Weise als Rollmeter eingesetzt werden, ohne dass Verwechslungen beim Ablesen auftreten.

Das Skalenband kann von der Bedienperson gestrafft gehalten werden. Auch bei stärkerem Wind bleibt so die Messgenauigkeit erhalten.

Nachfolgend wird die Erfindung anhand der in der Zeichnung dargestellten Figuren näher erläutert. Es zeigen:

Figur 1 eine Anordnung zur Messung der Höhenlage unter Anwendung eines Rollmeters;
Figur 2 ein Rollmeter im Querschnitt;
Figur 2a eine weitere Bauform des Rollmeters im Querschnitt;
Figur 2b ein Rollmeter mit jeweils zwei Skalen auf beiden Seiten des Skalenträgers, wobei eine der beiden Skalen jeweils spiegelverkehrt ist;
Figur 3 einen Abstandshalter mit einem Halteteil zur Befestigung eines am auszugseitigen Ende des Skalenträgers vorgesehenen Hakens;
Figur 3a eine Ausbildungsvariante des Halteteils des Abstandshalters;
Figur 4a eine weitere Ausbildungsvariante des Abstandshalters im Aufriss;
Figur 4b einen Grundriss des in Fig.4a gezeigten Abstandshalters
Figur 4c ein Detail des Abstandshalters aus Fig. 4, das Halteteil 21 für den Haken 8 des Rollmeters darstellend;
Figur 5a, 5b verschiedene Skalen, die auf dem Skalenträger aufgebracht sein können und
Figur 6 einen Lotstab zur Aufnahme einer oder mehrerer, gegebenenfalls kodierter Skalen.

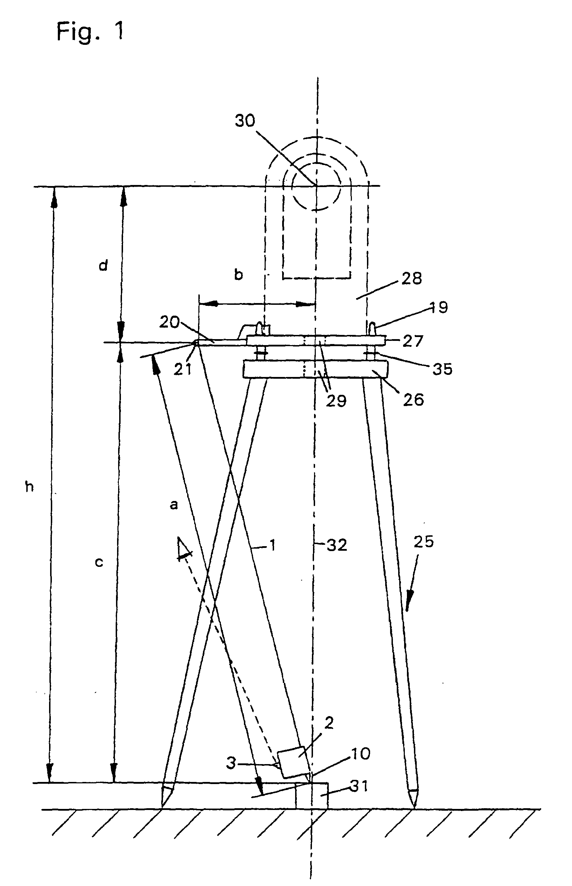

Die Figur 1 zeigt ein herkömmliches Dreibeinstativ 25, von dem zwei Beine abgebildet sind. Auf den Stativteller 26 am Kopf des Stativs ist ein herkömmlicher Dreifuss 27 aufgesetzt, welcher horizontal ausgerichtet wird. Der Dreifuss 27 ist zur Aufnahme beispielsweise eines Instruments 28 vorbereitet. Stativteller 26 und Dreifuss 27 weisen jeweilige zentrale Bohrungen 29 auf, durch die der Laserstrahl eines Laserpositioniergeräts (nicht dargestellt) bzw. ein optisches Lot gerichtet wird, um den Dreifuss 27 senkrecht über dem in einem Grenzstein 31 markierten Basispunkt auszurichten. Die horizontale Ausrichtung des Dreifusses geschieht über Stellschrauben 35, die an der Oberseite des Dreifusses 27 Abdeckkappen 19 aufweisen.

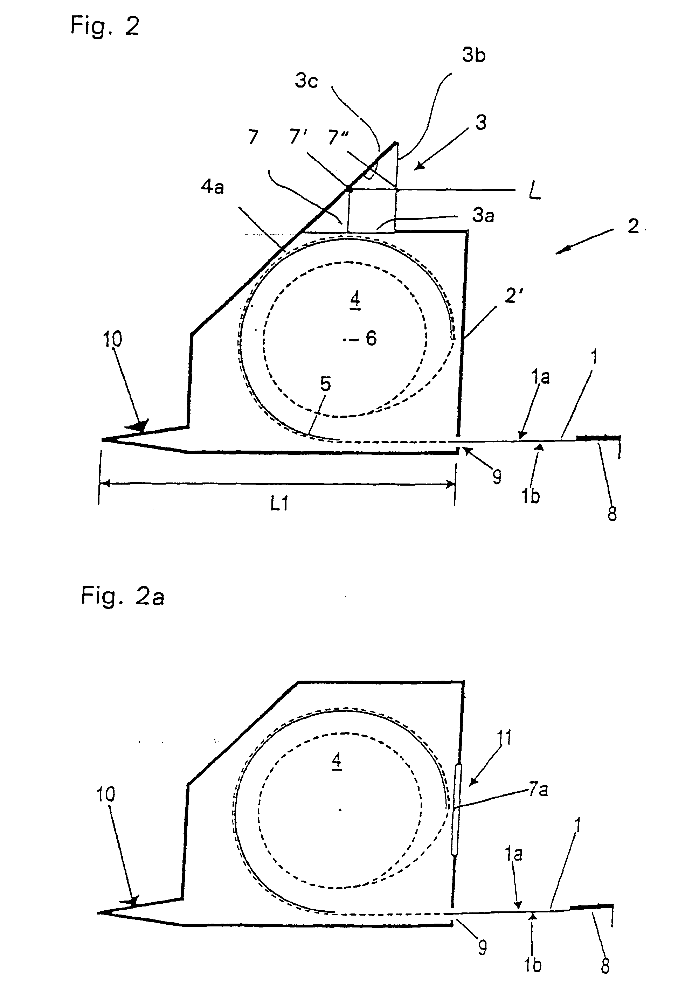

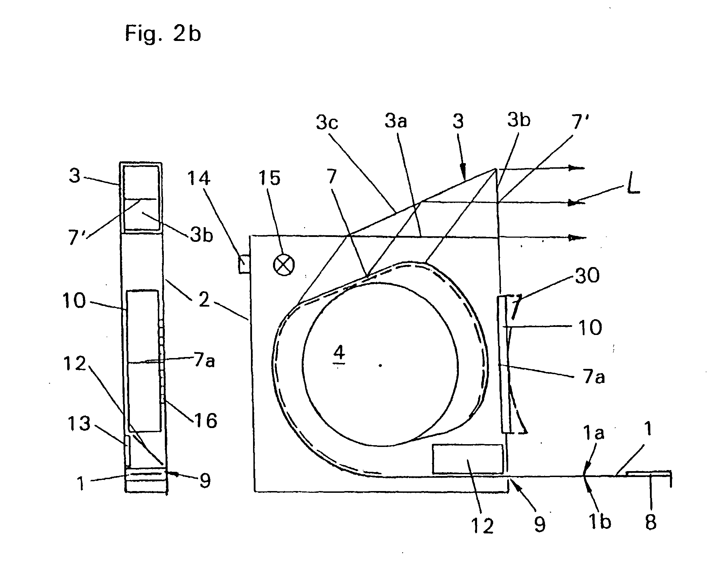

Um Messaufgaben mit dem Instrument 28 durchzuführen, ist beispielsweise die Kenntnis der Höhenlage seiner optischen Achse 30 über dem Basispunkt notwendig. Die Messanordnung zur Bestimmung dieser bzw. einer anderen gewünschten Höhenlage umfasst einen an einer Ecke des Dreifusses 27 befestigten Abstandshalter 20 sowie ein Rollmeter 2 entsprechend Fig.2, 2a bzw. Fig.2b mit einem Skalenband 1. Das auszugsseitige Ende des Skalenbands 1 wird am Ende eines Abstandshalters 20 in eine entsprechende Halterung an einem Halteteil 21 des Abstandshalters eingehängt. Das Gehäuse 2' des Rollmeters 2 wird von der Bedienperson nach unten gezogen und mit einem Messdorn 10 auf den Referenzbodenpunkt oder in dessen unmittelbarer Nähe aufgesetzt. Die Skala auf dem Skalenband 1 ist spiegelverkehrt aufgebracht. Mittels eines Spiegels 3 (Fig.2,2b), der die Skala nach oben im wesentlichen in Auszugsrichtung des Skalenbands 1 spiegelt, ist der sich ergebende Skalenwert seitenrichtig abzulesen.

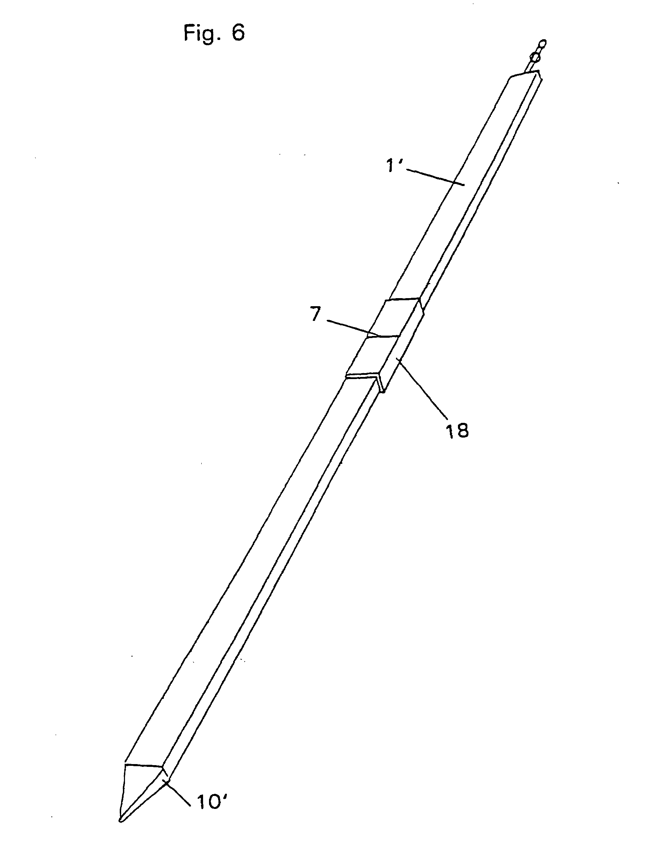

Die Skala selbst ist derart eingeteilt und beschriftet, dass sie nicht etwa wie bei einem herkömmlichen Rollmeter die Länge der Strecke zwischen Halteteil 21 (Angriffspunkt) am Abstandshalter 20 und Messdorn 10 des Gehäuses des Rollmeters 2 angibt, sondern die Höhenlage h = c + d der optischen Achse 30 über der beispielsweise durch einen Grenzstein 31 vorgegebenen Referenzebene. Hierzu ist die Skala auf dem Skalenband 1 umgerechnet, unter Anwendung des sogenannten Satzes von Pythagoras gemäss $a^2 = b^2 + c^2$. Hierbei ist a die Strecke vom Kontaktpunkt des Abstandshalters 20 (mit dem Skalenband bzw. einem angelegten Lotstab entsprechend Fig.6) zum Lotpunkt der Lotlinie 32 auf den Basispunkt beziehungsweise die Referenzfläche, b der waagrechte Abstand des Endes des Abstandshalters 20 von der Lotlinie 32 und c die Länge der Lotlinie 32 vom Lotpunkt zum Auftreffpunkt des Abstands b auf die Lotlinie 32. Ausserdem ist additiv die konstante, vorbekannte Höhe d der optischen Achse 30 des Instrumentes über dem Schnittpunkt der Abstandslinie des Endes des Abstandshalters 20 auf die Lotlinie 32 berücksichtigt. Die Bemassung der Skala auf dem Skalenband 1 ist wie folgt berechnet:

$$h = \sqrt{a^2 - b^2} + d.$$

Es versteht sich, dass diese Formel nur einem horizontal angelegten Abstandshalter entspricht. Je nach vorgegebener Winkellage desselben wird diese entsprechend zu verändern sein.

Somit ergibt sich die gewünschte Höhenlage des geodätischen Instruments über dem Lotpunkt.

Anstelle des Rollmeters 2 kann auch beispielsweise ein Lotstab verwendet werden, der beispielsweis entsprechend Fig.6 ausgebildet sein kann. Der Lotstab wird auf dem Grenzstein 31 angesetzt und an das Halteteil 21 des Abstandshalters geführt und dort abgelesen. Die auf dem Lotstab aufgebrachte Skala ist dann wiederum unter Anwendung der obigen Formel berechnet.

Der Abstandshalter 20 wird am bereits horizontierten Oberteil des Dreifusses 27 an den Stellen mit dem grössten Abstand von der Lotlinie befestigt. Das Ende des Abstandshalters 20 ist zwischen die kopfseitigen Befestigungen zweier Stativbeine gerichtet, so dass das Skalenband 1 problemlos zwischen den Stativbeinen nach unten in Richtung des Basispunkts ausgezogen werden kann. Der Referenzbodenpunkt im Grenzstein 31 ist für gewöhnlich durch eine Vertiefung gekennzeichnet. Zweckmässigerweise wird der Messdorn 10 am Gehäuse des Rollmeters 2 leicht ausserhalb der Markierung auf dem Grenzstein, vorzugsweise auf der die Referenzfläche bestimmenden Stelle des Grenzsteins 31 positioniert. Die dadurch bedingte Ungenauigkeit der Messung fällt aber kaum ins Gewicht.

Der Abstandshalter 20 ist vorzugsweise so konstruiert, dass die instrumentenspezifische, vorbekannte Höhe d Adapter-spezifisch übernommen wird. Dadurch wird es möglich, für verschiedene Ausführungen von geodätischen Instrumenten das gleiche Rollmeter zu verwenden, denn die additive Höhe fällt dann weg. Für Dreifüsse 27 und Instrumente 28 unterschiedlicher Machart können dann jeweils eigene Adapter vorgesehen werden.

In Figur 2 ist beispielhaft ein Rollmeter 2 im Querschnitt dargestellt. Das Skalenband 1 wird aus dem Gehäuse 2' des Rollmeters 2 gegen eine Rückholkraft von einer Skalenbandrolle 4 ausgezogen. Die auf der Aussenseite der Rolle befindliche Skala ist über ein am Gehäuse 2' befestigtes Spiegelprisma 3 abzulesen. Das Prisma weist eine der Rolle gegenüber liegende Oberfläche 3a auf, eine Oberfläche 3b, die der Bedienperson zugewandt ist, sowie eine Oberfläche 3c mit spiegelnder Eigenschaft, so dass Licht von der Skala an der Seite 3c in Richtung der Bedienperson reflektiert wird. In die Seite 3a ist eine Ablesemarke 7, beispielsweise ein farbiger Ablesestrich eingearbeitet. Um die Parallaxe beim Ablesen möglichst gering zu halten, wird das Skalenband auf einer Führungsfläche 5 oder über einen Führungssteg, jeweils gegenüber dem Ablesestrich angeordnet, geführt. Die Spiegelfläche bildet mit der Auszugsrichtung des Skalenbands einen spitzen Winkel. Dadurch ist das Skalenband von oben her, also in Auszugsrichtung ablesbar.

Alternativ zu einem Spiegelprisma kann auch ein herkömmlicher Spiegel verwendet werden, der anstelle der Oberfläche 3c des Prismas angebracht ist. Das Gehäuse ist dann anstelle der Oberfläche 3a des Prismas mit einem Sichtfenster versehen. In dieser Ausführung mit Spiegel ode Prisma ist die Skala auf dem Skalenband 1 spiegelverkehrt notiert. Verwechslungen mit anderen, nicht spiegelverkehrt aufgebrachten Skalen auf dem Skalenband wird daher vorgebeugt.

Der Messdorn 10 ist spitz ausgeführt und befindet sich in Verlängerung der Massbandebene. Er ermöglicht dadurch eine genaue Positionierung des Rollmeters auf der Referenzfläche. Der Messdorn 10 ist vorzugsweise ausklappbar ausgeführt. Das ermöglicht die Verwendung des Rollmeters 2 für verschiedene Zwekke.

Das Prisma ist so angeordnet, dass die Bedienperson die Ablesung des Abstandes möglichst parallaxefrei vornehmen kann.

Denkbar ist auch, dass anstelle eines Spiegels ein Sichtfenster 11 am Gehäuse angeordnet ist, wie in Fig.2a dargestellt ist, über das die Skala unmittelbar abgelesen wird. Die entsprechende Skala ist dann auf der anderen Bandseite und demnach nicht seitenverkehrt aufgebracht.

Fig.2b zeigt ein Rollmeter, das gegebenenfalls vier Skalen beidseits des Skalenträgers aufweist, je zwei auf einer Seite. Eine der beiden Skalen auf jeder der beiden Seiten des Skalenträgers ist spiegelverkehrt. Eine der Skalen auf der Seite 1a wird unmittelbar am Spalt 9 abgelesen, die andere am Kopf stehende und spiegelverkehrte Skala über den Spiegel 12 durch das Sichtfenster 13.

Wenn sich wie hier zwei Skalen auf derselben Seite des Skalenträgers befinden, von denen eine am Kopf stehend und spiegelverkehrt ausgebildet ist, ermöglicht dies das Ablesen des Skalenträgers aus jeder beliebigen Richtung, da eine der beiden Skalen immer lesbar ist, während die jeweils andere am Kopf stehende über den Spiegel abgelesen werden kann. Ein Ablesefehler durch Verwechslung der beiden Skalen ist durch diese Darstellung der Skalen ebenfalls weitgehend ausgeschlossen.

Die auf der Seite 1b des Skalenträgers befindlichen Skalen werden über den Spiegel 3 beziehungsweise über das Sichtfenster 11 abgelesen.

Der Spiegel ist in diesem Fall in einem spitzeren Winkel als 45° geneigt. Der Ablesebereich wird gestaucht dargestellt. Ablesemarken 7,7' befinden sich direkt oberhalb des Skalenbandes 1 und am benutzerseitigen Fenster 3b um die Parallaxe gering zu halten.

Da der Lichtweg über den Spiegel 3 beträchlich länger ist als durch ein Sichtfenster und nur Licht reflektiert werden kann, das von aussen durch den Spiegel bis zum Skalenträger 1 vordringt, kann zur besseren Lesbarkeit der Skala eine kleine Beleuchtung 15, beispielsweise eine Glühbirne oder eine Leuchtdiode, im Bereich der Skala angebracht werden, die durch ein einfaches Mittel, zum Beispiel einen Druckknopf 14 an der Oberfläche des Gehäuses 2', ein- und ausgeschaltet wird. Dies ist vor allem bei schlechten äusseren Lichtverhältnissen von Nutzen.

Die elektrische Energie zum Betrieb der Beleuchtung kann über eine Batterie zur Verfügung gestellt werden. Es kann aber auch über einen kleinen Generator der durch das Ausziehen des Skalenbandes angetrieben wird ein Akkumulator aufgeladen werden. Ebenso kann ein Kondensator geladen werden, der aber nicht ausschliesslich elektromotorisch sondern auch elektrostatisch aufgeladen werden kann

Mögliche andere Ausbildungsvarianten für derartige Rollmeter sind in der von derselben Anmelderin am selben Tag eingereichten Schweizer Patentanmeldung mit dem Titel "Messgerät, insbesondere Längenmessgerät, mit mindestens zwei Skalen" beschrieben und gelten hiermit als geoffenbart.

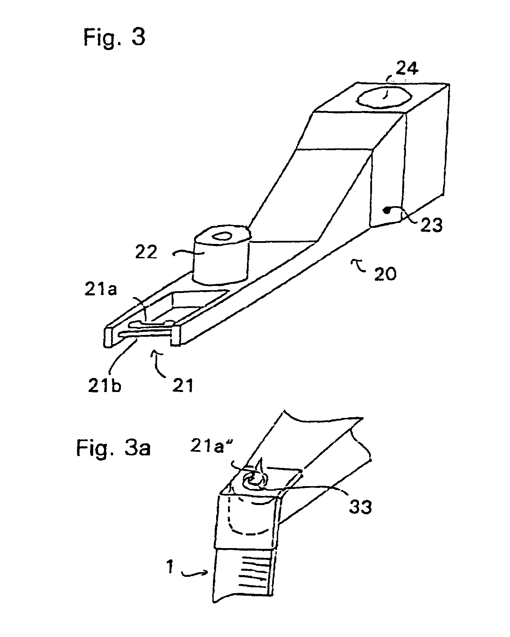

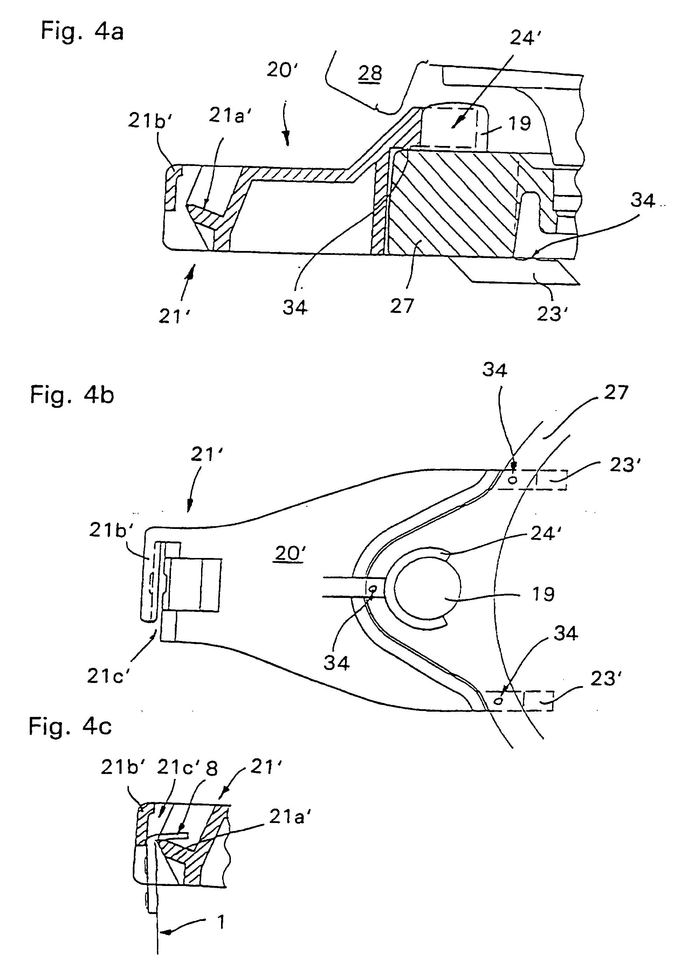

Eine mögliche Ausbildung für einen Abstandshalter 20 ist in Figur 3 perspektivisch dargestellt. Der Abstandshalter 20 wird am bereits horizontierten Oberteil des Dreifusses 27 an den Stellen mit dem grössten Abstand von der Lotlinie befestigt. Dabei ist das Ende des Abstandshalters 20 zwischen die kopfseitigen Befestigungen zweier Stativbeine gerichtet, wie aus Fig.1 zu ersehen. Dort ist eine Abdeckkappe 19 (s. Fig.4b) für eine der Stellschrauben gegeben, über die der Abstandshalter 20 mittels einer in ihm vorgesehenen Bohrung 24 eingeschoben und positioniert wird. Beidseits des dem Dreifuss zugeordneten Bereichs des Abstandshalters 20 sind Schrauben 23 angeordnet, die ein horizontales Ausrichten des Abstandshalters 20 ermöglichen, was über eine Libelle 22 überprüfbar ist. Das Vorsehen von Schrauben und/oder einer Libelle ist fakultativ, zur Verbesserung der sicheren horizontalen Ausrichtung. Am äusseren Ende des Abstandshalters 20 befindet sich das Halteteil 21, in das ein am Ende des Skalenbands 1 in herkömmlicher Weise montierter Haken eingeführt wird. Dieser Halteteil umfasst zwei parallele Stäbe 21a und 21b. Ersterer ist gegebenenfalls drehbar gelagert und hat einen Ausschnitt, durch den der Haken des Rollmeters geführt wird.

Fig.3a zeigt eine alternative Befestigungsvariante, bei der ein Dorn 21a" als Halteteil am Abstandshalter 20 vorgesehen ist, über den das Hakenende des Skalenbandes 1 mit einer Ausnehmung 33 befestigt wird.

Eine Variante für einen erfindungsgemässen Abstandshalter 20' zeigt Figur 4a im Aufriss und Figur 4b im Grundriss. Wie oben beschrieben, wird er am bereits horizontierten Dreifuss 27 an der Abdeckkappe 19 für eine Stellschraube über eine anstelle der aus Figur 3 zu ersehenden Bohrung 24 vorgesehene Klemme 24' befestigt. Zwei Füsse 23' an der Unterseite des Abstandshalters 20' greifen von unten in den Dreifuss 27 ein, so dass der Abstandshalter 20' im wesentlichen klemmfest an dem Dreifuss 27 befestigt und waagrecht positioniert ist. Auflagepunkte 34 an den Füssen 23' und im Bereich des auf der Oberseite des Dreifusses 27 aufliegenden Abstandshalters 20' verhindern in vorteilhafter Weise die Verdrehung des Abstandshalters 20' in Höhenrichtung. An dem Dreifuss-abgewandten Ende des Abstandshalters 20' befindet sich das Halteteil 21' für den am auszugseitigen Ende des Skalenbandes 1 vorgesehenen Haken 8. Das geodätische Instrument 28 ist in Fig.4a angedeutet.

In Fig.4c ist der Halteteil 21' mit dem bereits darin befestigten Haken 8 des Rollmeters 2 dargestellt. Das Halteteil 21' umfasst einen Auflageteil 21a' auf dem der Haken 8 aufliegt und einen Befestigungsteil 21b', der verhindert, dass der Haken 8 vom Auflageteil 21a' abrutschen kann. Zwischen Auflageteil 21a' und Befestigungsteil 21b' ist seitlich ein Schlitz 21c' angeordnet, der breit genug ist, um das auszugsseitige Ende des Skalenbandes 1 mühelos hineinstecken zu können. Dies erleichtert die Befestigung des Hakens 8. Zur Befestigung des Skalenträgers wird dieser in den Schlitz 21c' gesteckt. Danach wird das Skalenband 1 nach unten gezogen, so dass der Haken 8 von oben her in den Bereich des Schlitzes 21c' gleitet, bis er an der Auflagefläche fest anliegt. Damit ist der Haken 8 festgelegt und das Rollmeter kann, entsprechend Fig.1, zur Messung der Distanz zwischen beispielsweise optischer Achse eines Theodoliten und Referenzpunkt ausgezogen und positioniert werden.

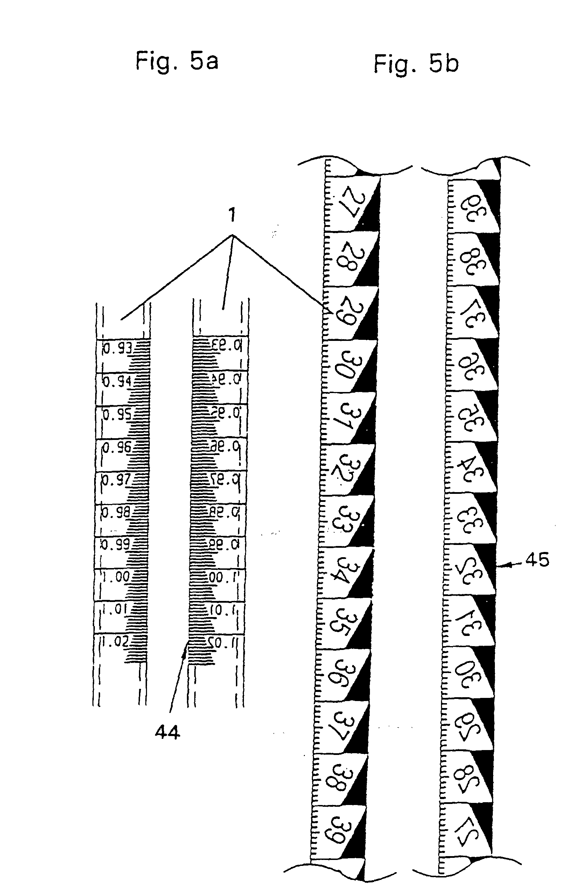

Ausschnitte aus auf dem Skalenband 1 aufgebrachten Skalen sind in Figur 5a und 5b dargestellt. Die Skala in Fig.5a zeigt eine nichtlineare Skaleneinteilung gemäss der oben angegebenen Formel. Sie kann spiegelverkehrt dargestellt werden, um über das Prisma 3 (Fig.2, bzw. 2b) seitenrichtig abgelesen werden zu können oder aber in üblicher Weise dargestellt sein für die Bauform mit einem herkömmlichen Sichtfenster. In Fig. 5b ist eine anders gestaltete Skala abgebildet, die ebenfalls eine Verringerung des Ablesefehlers bewirkt.

Aufgrund der unterschiedlichen, mit zunehmender Messgrösse länger werdenden Teilstriche wird ein fehlerfreies Ablesen gewährleistet, auch bei spiegelverkehrter Darstellung und auch wenn nur ein relativ geringer Ausschnitt des Skalenträgers im Ablesebereich sichtbar ist. Dies wird zum Beispiel erreicht durch verschieden lange Teilstriche 44. So hat beispielsweise der Wert 0,1 den kürzesten Teilstrich und der Wert 0,9 den längsten Teilstrich, eventuell mit Ausnahme des Wertes 0,5. In ähnlicher Weise könnte eine Darstellung in Keil- oder Pfeilform 45 vorgesehen werden, wie aus Fig.5b zu entnehmen.

Figur 6 zeigt einen Lotstab 1' mit einer oder mehreren - gegebenenfalls kodierten - Skalen, die über ein als Schieber 18 ausgebildetes Ablesemittel, gegebenenfalls mit einer Ablesemarke 7 versehen, abgelesen werden können. Zumindest eine der aufgebrachten Skalen ist nichtlinear und nach der oben genannten Formel berechnet. Die untere Kante des Lotstabs kann als spitzer Anschlag 10' ausgeführt sein, um die Positionierung des Stabs auf dem Basispunkt sicher zu stellen und damit Messfehler zu minimieren. Der Stab wird zur Messung der Höhenlage auf den Basispunkt gestellt und gegen den Abstandshalter gehalten, so dass die Höhenlage unmittelbar oder auch - im Fall von mehreren, gegebenenfalls andernfalls zu verwechselnden, Skalen - nur über das in einer der oben dargestellten Weisen ausgebildete Ablesemittel abgelesen werden.

**Patentansprüche**

1.  Anordnung zur Bestimmung der Höhenlage eines auf einem Stativ (25) montierten, insbesondere geodätischen, Instruments (28) über einer Referenzfläche, mit einem Mittel (2) zum Messen einer Länge (a) mit wenigstens einer an diesem Mittel angebrachten Skala, die derart gestaltet ist, dass sie die Höhenlage (h) des Instruments (28) längs der Lotlinie (32) über der Referenzfläche ablesbar macht, **dadurch gekennzeichnet dass**, ein an dem Stativ (25) bzw. dem Instrument (28) zu befestigender Abstandshalter (20) mit einem Halteteil (21), das an der dem Stativ bzw. dem Instrument abgewandten Seite ausserhalb einer Lotlinie (32), längs der die Höhenlage zu bestimmen ist, liegt, vorgesehen ist, wobei das Mittel einenends an das Halteteil des Abstandshalters (20) und anderenends an den Schnittpunkt Lotlinie-Referenzfläche anzulegen ist.

2.  Anordnung nach Anspruch 1, **dadurch gekennzeichnet, dass** das Mittel zum Messen der Länge einen Skalenträger (1,1') aufweist, auf dem mindestens eine erste und eine zweite Skala aufgebracht sind, wobei wenigstens eine der Skalen kodiert, unmittelbar nicht lesbar, aufgebracht ist, welche Skala über ein dem Skalenträger (1,1') zugeordnetes, eine Ablesemarke (7) aufweisendes Ablesemittel (3,18) mittelbar lesbar ist.

3.  Anordnung nach Anspruch 1 oder 2 **dadurch gekennzeichnet, dass** das Mittel zum Messen der Länge ein Rollmeter (2) ist, welches einen Anschlag, insbesondere in Form eines Messdorns (10), zum Aufsetzen auf die Referenzfläche und ein aufrollbares Skalenband (1) umfasst, und dass der Abstandshalter (20) ein Haltemittel (21a; 21a'; 21a") für das auszugsseitige Ende des Skalenbands aufweist.

4.  Anordnung nach Anspruch 1 oder 2, **dadurch gekennzeichnet, dass** das Mittel zum Messen der Länge ein Lotstab (1') ist, der einenends einen Anschlag (10') zum Aufsetzen auf die Referenzfläche aufweist.

5.  Anordnung nach einem der Ansprüche 2 bis 4, **dadurch gekennzeichnet, dass** wenigstens eine Skala auf eine der folgenden Arten kodiert ist:

    -   die Skala ist spiegelverkehrt auf dem Skalenträger aufgebracht;
    -   die Skala ist mit einem Farbüberdruck versehen;
    -   die Skala ist in Form von defokussierten Zeichen ausgebildet;
    -   die Skala ist in Form eines Leerstellen-Rasters ausgeführt.

6.  Anordnung nach einem der Ansprüche 2 bis 5, **dadurch gekennzeichnet, dass** das Ablesemittel - gegebenenfalls in Form eines auf dem Skalenträger (1') angeordneten Laufschiebers (18), auf eine der folgenden Arten ausgebildet ist:

    -   das Ablesemittel ist als Spiegel oder Prisma ausgebildet;
    -   das Ablesemittel ist als Farbfilter ausgebildet;
    -   das Ablesemittel ist als astigmatische Linse ausgebildet;
    -   das Ablesemittel ist als Gegenraster ausgebildet.

7.  Anordnung nach einem der Ansprüche 2 bis 6, **dadurch gekennzeichnet, dass** wenigstens eine der Skalen, insbesondere die kodierte Skala, derart ausgebildet ist, dass jeder numerisch angegebenen Massangabe ein die aufsteigende bzw. abfallende Messwert-Reihe direkt anzeigende Richtungs-Information zugeordnet ist, wie eine längenmässig zunehmende Teilstrich-Folge oder eine keilförmig oder pfeilförmig ausgebildete, zwischen den numerischen Massangaben vorgesehene Markierung (23).

8. Anordnung nach einem der Ansprüche 1 bis 7, **dadurch gekennzeichnet, dass** die wenigstens eine Skala nichtlinear ausgebildet ist, insbesondere unter Anwendung der Beziehung $a^2 = b^2 + c^2$ berechnet wurde, wobei a die Strecke (a) vom Ende des Abstandshalters (20) zum Lotpunkt der Lotlinie (32) auf die Referenzebene ist, b der Abstand (b) des Endes des Abstandshalters (20) von der Lotlinie (32) ist und c die Länge (c) der Lotlinie (32) vom Lotpunkt zum Auftreffpunkt des Abstands b auf die Lotlinie ist.

9. Anordnung nach einem der Ansprüche 1 bis 8, **dadurch gekennzeichnet, dass** das Stativ (25) ein Dreibeinstativ ist und dass der Abstandshalter (20,20') an einem am Stativ (25) vorgesehenen Dreifuss (27) - insbesondere an einem Positioniervorsprung, gegebenenfalls an der Abdeckkappe (19) einer zur horizontalen Ausrichtung des Dreifusses (27) vorgesehenen Stellschraube (35), - abnehmbar befestigt ist und das Halteteil (21,21') des Abstandshalters (20,20') zwischen die kopfseitige Befestigungen zweier Stativbeine von der Lotlinie (32) weg gerichtet ist.

10. Anordnung nach Anspruch 9, **dadurch gekennzeichnet, dass** am Halteteil (21') des Abstandhalters (20') eine seitliche Ausnehmung (21c') zur Einführung des insbesondere mit einem Haken (8) versehenen Endes eines am Mittel zum Messen einer Länge angeordneten Skalenträgers (1,1') vorgesehen ist.

11. Anordnung nach Anspruch 9 oder 10, **dadurch gekennzeichnet, dass** der Abstandhalter (20') eine Klemme (24') zum klemmenden Umfassen der Positionierhilfe, insbesondere der Abdeckkappe (19), und zwei Füsse (23') zum Eingriff in die Unterseite des Dreifusses (27) aufweist.

12. Abstandshalter für eine Anordnung zur Bestimmung der Höhenlage eines auf einem Stativ (25) montierten, insbesondere geodätischen, Instruments (28) über einer Referenzfläche, mit einem Mittel zum Messen einer Länge, welches einenends an ein am Abstandshalter (20,20') vorgesehenes Halteteil (21,21') und anderenends an den Schnittpunkt Lotlinie-Referenzfläche anzulegen ist, wobei der Abstandshalter (20,20') an Stativ (25), am Instrument (28) oder an einem am Stativ (25) vorgesehenen Dreifuss (27) - insbesondere an einem an letzterem vorgesehenen Positioniervorsprung, gegebenenfalls an der Abdeckkappe (19) einer zur horizontalen Ausrichtung des Dreifusses (27) vorgesehenen Stellschraube (35), - abnehmbar befestigbar ist, **dadurch gekennzeichnet, dass** das Halteteil (21,21') des befestigten Abstandshalters (20,20') einen vorgegebenen, unveränderbaren, horizontalen Abstand zur Lotlinie (32) aufweist.

13. Abstandshalter nach Anspruch 12, **dadurch gekennzeichnet, dass** der Abstandshalter (20,20') eine Bohrung (24) oder eine Klemme (24') zum insbesondere klemmenden Umfassen der Positionierhilfe, insbesondere der Abdeckkappe (19), und gegebenenfalls zwei Füsse (23') zum Eingriff in die Unterseite des Dreifusses (27) aufweist.

14. Abstandshalter nach Anspruch 12 oder 13, **dadurch gekennzeichnet, dass** am Halteteil (21') des Abstandhalters (20') eine seitliche Ausnehmung (21c') zur Einführung des insbesondere mit einem Haken (8) versehenen Endes eines am Mittel zum Messen einer Länge angeordneten Skalenträgers (1) vorgesehen ist.

## Claims

1. System for determining the height of a tool (28), in particular a geodetic one, mounted on a stand (25), above a reference surface, comprising a means (2) for measuring a length (a) with at least one scale which is applied to this means and is designed in such a way that it enables the height (h) of the tool (28) along the plumb line (32) above the reference surface to be read, **characterized in that** a spacer (20) to be fastened to the stand (25) or to the tool (28) is provided with a retaining part (21) which is located on the side facing away from the stand or from the tool, outside a plumb line (32) along which the height is to be determined, the means being intended to be applied at one end to the retaining part of the spacer (20) and at the other end to the point of intersection of the plumb line with the reference surface.

2. System according to Claim 1, **characterized in that** the means for measuring the length has a scale support (1, 1') on which at least one first and one second scale are applied, at least one of the scales being applied in coded form not directly readable, which scale can be indirectly read using a reading means (3, 18) coordinated with the scale support (1, 1') and having a reading mark (7).

3. System according to Claim 1 or 2, **characterized in that** the means for measuring the length is a roll-up tape measure (2) which comprises a stop, in particular in the form of a measuring spike (10), for mounting on the reference surface and a graduated tape (1) which can be rolled up, and **in that** the spacer (20) has retaining means (21a; 21a'; 21a") for the pull-out end of the graduated tape.

4. System according to Claim 1 or 2, **characterized in that** the means for measuring the length is a plumb rod (1') which has, at one end, a stop (10') for mounting on the reference surface.

5. System according to any of Claims 2 to 4, **characterized in that** at least one scale is coded in one of the following ways:

   - the scale is applied mirror-inverted to the scale support;
   - the scale is provided with a colour overprint;
   - the scale is in the form of defocused characters;
   - the scale is in the form of a grid with spaces.

6. System according to any of Claims 2 to 5, **characterized in that** the reading means - optionally in the form of a slide (18) arranged on the scale support (1') - is formed in one of the following ways:

   - the reading means is in the form of a mirror or prism;
   - the reading means is in the form of a colour filter;
   - the reading means is in the form of an astigmatic lens;
   - the reading means is in the form of a counter-grid.

7. System according to any of Claims 2 to 6, **characterized in that** at least one of the scales, in particular the coded scale, is formed in such a way that a piece of directional information directly indicating the ascending or descending measured value series is coordinated with each numerically specified measurement, such as a graduation line sequence increasing as a function of length or a wedge-like or arrow-like mark (23) provided between the numerical measurements.

8. System according to any of Claims 1 to 7, **characterized in that** the at least one scale is nonlinear, in particular was calculated using the relationship $a^2 = b^2 + c^2$, a being the distance (a) from the end of the spacer (20) to the point of contact of the plumb line (32) with the reference surface, b being the distance (b) of the end of the spacer (20) from the plumb line (32) and c being the length (c) of the plumb line (32) from the point of contact of the plumb line with the reference surface to the point of intersection of the distance b with the plumb line.

9. System according to any of Claims 1 to 8, **characterized in that** the stand (25) is a tripod stand and that the spacer (20, 20') is removably fastened to a tripod (27) provided on the stand (25) - in particular to a positioning projection, optionally to the cap (19) of an adjusting screw (35) provided for horizontal alignment of the tripod (27), and the retaining part (21, 21') of the spacer (20, 20') is directed away from the plumb line (32) between those fastenings of two stand legs which are on the head side.

10. System according to Claim 9, **characterized in that** the retaining part (21') of the spacer (20') is provided with a lateral recess (21c') for the introduction of that end of a scale support (1, 1') arranged on the means for measuring a length which is provided in particular with a hook (8).

11. System according to Claim 9 or 10, **characterized in that** the spacer (20') has a clamp (24') for clamping around the positioning aid, in particular the cap (19), and two feet (23') for engaging the underside of the tripod (27).

12. Spacer for a system for determining the height of a tool (28), in particular a geodetic one, mounted on a stand (25), above a reference surface, comprising a means for measuring a length which is intended to be applied at one end to a retaining part (21, 21') provided on the spacer (20, 20') and at the other end to the point of intersection of the plumb line with the reference surface, the spacer (20, 20') being capable of being removably fastened to the stand (25), to the instrument (28) or to a tripod (27) provided on the stand (25) - in particular to a positioning projection provided on the latter, optionally to the cap (19) of an adjusting screw (35) provided for the horizontal alignment of the tripod (27) - **characterized in that** the retaining part (21, 21') of the fastened spacer (20, 20') is a predetermined, unalterable horizontal distance away from the plumb line (32).

13. Spacer according to Claim 12, **characterized in that** the spacer (20, 20') has a hole (24) or a clamp (24') for gripping, in particular clamping, around the positioning aid, in particular the cap (19), and optionally two feet (23') for engaging the underside of the tripod (27).

14. Spacer according to Claim 12 or 13, **characterized in that** the retaining part (21') of the spacer (20') is provided with a lateral recess (21c') for the introduction of that end of a scale support (1) arranged on the means for measuring a length which is provided in particular with a hook (8).

## Revendications

1. Dispositif pour la détermination du niveau d'un instrument (28), en particulier géodésique, monté sur un pied (25), au-dessus d'une surface de référence, avec un mot (2) pour mesurer une longueur (a), avec au moins une échelle montée sur ce moyen, réalisée de manière qu'elle permette de lire le niveau (h) de l'instrument (28), le long de la verticale (32), au-dessus de la surface de référence, **caractérisé en ce qu'**est prévu un support d'espacement (20), à fixer sur le pied (25), respectivement sur l'instrument (28), avec une partie de maintien (21), située sur le côté opposé au pied, respectivement à l'instrument, hors d'une verticale (32), le long de laquelle le niveau doit être déterminé, sachant que le moyen doit être appliqué, à une extrémité, sur la partie de maintien du support d'espacement (20) et, à l'autre extrémité, sur le point d'intersection vertical-surface de référence.

2. Dispositif selon la revendication 1, **caractérisé en ce que** le moyen de mesure de la longueur présente un support d'échelle (1, 1'), sur lequel sont montées au moins une première et une deuxième échelle, sachant qu'au moins l'une des échelles est appliquée de façon codée, ne pouvant être lue directement, cette échelle étant lisible indirectement, par l'intermédiaire d'un moyen de lecture (3, 18), présentant une marque de lecture (7), associé au support d'échelle (1, 1').

3. Dispositif selon la revendication 1 ou 2, **caractérisé en ce que** le moyen de mesure de la longueur est un mètre roulant (2), comprenant une butée, en particulier réalisée sous la forme d'un mandrin de mesure (10), à appliquer sur la surface de référence, et un ruban à échelle (1) enroulable, et **en ce que** le support d'espacement (20) présente un moyen de maintien (21a; 21a'; 21a") pour l'extrémité côté extraction du ruban d'échelle.

4. Dispositif selon la revendication 1 ou 2, **caractérisé en ce que** le moyen de mesure de la longueur est une barre de sondage (1'), présentant, à une extrémité, une butée (10'), pour l'application sur la surface de référence.

5. Dispositif selon l'une des revendications 2 à 4, **caractérisé en ce qu'**au moins une échelle est codée selon l'un des types suivants :

   - l'échelle est appliquée, en étant inversée de façon spéculaire, sur le support d'échelle;
   - l'échelle est munie d'une surimpression colorée ;
   - l'échelle est réalisée à la forme d'un caractère défocalisé;

   - l'échelle est réalisée à la forme d'une trame à points vides.

6. Dispositif selon l'une des revendications 2 à 5, **caractérisé en ce que** le moyen de lecture - le cas échéant se présentant sous la forme d'un curseur mobile (18), disposé sur le support d'échelle (1') -, est réalisé selon l'une des façons suivantes :

   - le moyen de lecture est réalisé sous la forme de miroir ou de prisme;
   - le moyen de lecture est réalisé sous la forme de filtre de couleur;
   - le moyen de lecture est réalisé sous la forme de lentille astigmatique;
   - le moyen de lecture est réalisé sous la forme de trame conjuguée.

7. Dispositif selon l'une des revendications 2 à 6, **caractérisé en ce qu'**au moins l'une des échelles, en particulier l'échelle codée, est réalisée de manière que, à chaque indication quantitative, donnant une indication numérique, soit associée une information directionnelle, indiquant directement la série de valeurs de mesure, croissante ou décroissante, telle qu'une succession de traits de division allant en augmentant selon la longueur, ou bien un marquage (23), réalisé en forme de coin ou en forme de flèche, prévu entre les indications quantitatives numériques.

8. Dispositif selon l'une des revendications 1 à 7, **caractérisé en ce que** la au moins une échelle est non linéaire, en particulier est calculée en appliquant la relation $a^2 = b^2 + c^2$, sachant que a est la distance (a) entre l'extrémité du support d'espacement (20) et le point à la verticale de la ligne verticale (32) sur le plan de référence, b est l'espacement (b) entre l'extrémité du support d'espacement (20) et la ligne verticale (32) et c est la longueur (c) de la ligne verticale (32), du point à l'aplomb au point d'arrivée de l'espacement b sur la ligne verticale à l'aplomb.

9. Dispositif selon l'une des revendications 1 à 8, **caractérisé en ce que** le pied (25) est un pied à trois pattes et **en ce que** le support d'espacement (20, 20') est fixé de façon amovible sur un trépied (27), prévu sur le pied (25) - en particulier sur une saillie de positionnement, le cas échéant sur le capuchon de recouvrement (19) d'une vis de réglage (35), prévue pour effectuer l'orientation horizontale du trépied (27) - et la partie de maintien (21, 21') du support d'espacement (20, 20') s'étend en s'écartant, entre les fixations, côté tête, de deux pattes de pied vis-à-vis de la verticale (32).

10. Dispositif selon la revendication 9, **caractérisé en**

**ce que**, sur la partie de maintien (21') du support d'espacement (20'), est prévu un évidement latéral (21c'), pour l'insertion de l'extrémité, en particulier pourvue d'un crochet (8), d'un support d'échelle (1, 1'), disposé sur le moyen de mesure d'une longueur.

11. Dispositif selon la revendication 9 ou 10, **caractérisé en ce que** le support d'espacement (20') présente une pince (24) pour entourer, avec effet de serrage, l'aide au positionnement, en particulier le capuchon de recouvrement (19), et deux pattes (23'), devant venir en prise dans la face inférieure du trépied (27).

12. Support d'espacement pour un dispositif de détermination du niveau d'un instrument (28), en particulier géodésique, monté sur un pied (23), au-dessus d'une surface de référence, avec un moyen pour mesurer une longueur, à appliquer à une extrémité sur une partie de maintien (21, 21'), prévue sur le support d'espacement (20, 20'), et, à l'autre extrémité, sur le point d'intersection ligne verticale-surface de référence, le support d'espacement (20, 20') étant susceptible d'être fixé de façon amovible sur le pied (25), sur l'instrument (28) ou sur un trépied (27), prévu sur le pied (25) - en particulier sur une saillie de positionnement prévue sur ce dernier, le cas échéant sur le capuchon de recouvrement (19) d'une vis de réglage (35) prévue pour effectuer le réglage d'orientation horizontale du trépied (27), **caractérisé en ce que** la partie de maintien (21, 21') du support d'espacement (20, 20') fixé, présente un espacement horizontal non-modifiable, prédéterminé, par rapport à la verticale (32).

13. Support d'espacement selon la revendication 12, **caractérisé en ce que** le support d'espacement (20, 20') présente un perçage (24) ou une pince (24') pour entourer, en particulier avec effet de serrage, l'aide au positionnement, en particulier le capuchon de recouvrement (196) et, le cas échéant, deux pattes (23'), devant venir en prise dans la face inférieure du trépied (27).

14. Support d'espacement selon la revendication 12 ou 13, **caractérisé en ce que**, sur la partie de maintien (21') du support d'espacement (20'), est prévu un évidement latéral (21c'), pour l'insertion de l'extrémité, en particulier munie d'un crochet (8), d'un support d'échelle (1), disposé sur le moyen de mesure d'une longueur.

# Fig. 1

**Fig. 2**

**Fig. 2a**

13

Fig. 2b

Fig. 3

24

22

21a

21b    21

20

23

Fig. 3a    21a"

33

1

Fig. 4a

Fig. 4b

Fig. 4c

Fig. 5a     Fig. 5b

Fig. 6

1'

7

18

10'